(19) Europäisches Patentamt
European Patent Office
Office européen des brevets

(11) **EP 4 685 530 A1**

(12) **EUROPEAN PATENT APPLICATION**

(43) Date of publication:
**28.01.2026   Bulletin 2026/05**

(21) Application number: 25189783.1

(22) Date of filing: **16.07.2025**

(51) International Patent Classification (IPC):
**G02B 6/02** (2006.01)

(52) Cooperative Patent Classification (CPC):
**G02B 6/02042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   22.07.2024   JP 2024117192
                19.06.2025   JP 2025104019

(71) Applicant: **Lightera Japan Co., Ltd.**
**Tokyo 100-8322 (JP)**

(72) Inventor: **MUKASA, Kazunori**
**Tokyo, 100-8322 (JP)**

(74) Representative: **SSM Sandmair**
**Patentanwälte Rechtsanwalt**
**Partnerschaft mbB**
**Joseph-Wild-Straße 20**
**81829 München (DE)**

(54) **MULTI-CORE FIBER**

(57)   A multi-core fiber includes: a plurality of core portions; and a cladding portion surrounding the plurality of core portions and having a refractive index lower than a maximum refractive index of the core portions. An outer diameter of the cladding portion is within a range of 125 $\mu$m $\pm$ 10 $\mu$m, the number of the plurality of core portions is two to four, the plurality of core portions are constituted by two or more core portion groups, and the core portions that belong to the different core portion groups from among the plurality of core portions have different effective core areas or cutoff wavelengths at a predetermined wavelength that differ by 10% or more.

FIG.1

**Description**

BACKGROUND

The present disclosure relates to a multi-core fiber.

In a multi-core fiber that is provided with a plurality of core portions, inter-core crosstalk may sometimes be a problem. As a method for solving this problem, there is a method of constituting the plurality of core portions as heterogenous core portions. The heterogenous core portions indicate core portions each having a different effective refractive index (for example, Japanese Patent No. 5168702).

SUMMARY

There is a room for improvement in the known multi-core fiber in terms of achieving high practicality while suppressing inter-core crosstalk.

There is a need for a multi-core fiber with higher practicality while suppressing inter-core crosstalk.

According to one aspect of the present disclosure, there is provided a multi-core fiber including: a plurality of core portions; and a cladding portion surrounding the plurality of core portions and having a refractive index lower than a maximum refractive index of the core portions, wherein an outer diameter of the cladding portion is within a range of 125 $\mu$m $\pm$ 10 $\mu$m, number of the plurality of core portions is two to four, the plurality of core portions are constituted by two or more core portion groups, and the core portions that belong to the different core portion groups from among the plurality of core portions have different effective core areas or cutoff wavelengths at a predetermined wavelength that differ by 10% or more.

BRIEF DESCRIPTION OF THE DRAWINGS

FIG. 1 is a schematic cross-sectional view of a multi-core fiber according to a first embodiment viewed from a plane perpendicular to a longitudinal direction of the multi-core fiber;

FIG. 2A and FIG. 2B are explanation diagrams illustrating examples of refractive index profiles of the multi-core fiber illustrated in FIG. 1;

FIG. 3 is a diagram illustrating one example of a relationship between the number of cores and inter-core crosstalk;

FIG. 4 is a diagram illustrating one example of a relationship between the number of cores and a confinement loss;

FIG. 5 is a diagram illustrating one example of a relationship between a difference in an effective core area between the cores and the inter-core crosstalk;

FIG. 6 is a schematic cross-sectional view of a multi-core fiber according to a second embodiment viewed from a plane perpendicular to a longitudinal direction of the multi-core fiber;

FIG. 7A and FIG. 7B are explanation diagrams illustrating examples of refractive index profiles of the multi-core fiber illustrated in FIG. 6;

FIG. 8 is an explanation diagram illustrating a refractive index profile according to a modification of the multi-core fiber according to the second embodiment;

FIG. 9 is a schematic cross-sectional view of a multi-core fiber according to a fourth embodiment viewed from a plane perpendicular to a longitudinal direction of the multi-core fiber; and

FIG. 10 is a schematic cross-sectional view of a multi-core fiber according to a fourth embodiment viewed from a plane perpendicular to a longitudinal direction of the multi-core fiber.

DETAILED DESCRIPTION

Hereinafter, embodiments will be described in detail below with reference to the drawings. The present disclosure is not limited by the embodiments described below. Furthermore, in each of the drawings, the same or corresponding component elements are appropriately denoted by the same reference symbols, and a repeated explanation may be omitted as appropriate. In addition, in the present specification, a cutoff wavelength or an effective cutoff wavelength indicates a cable cutoff wavelength that is defined by ITU-T G.650.1 of the International Telecommunication Union (ITU). Moreover, other terms that are not specifically defined in the present specification conform to definitions and measurement methods described in G.650.1 and G.650.2.

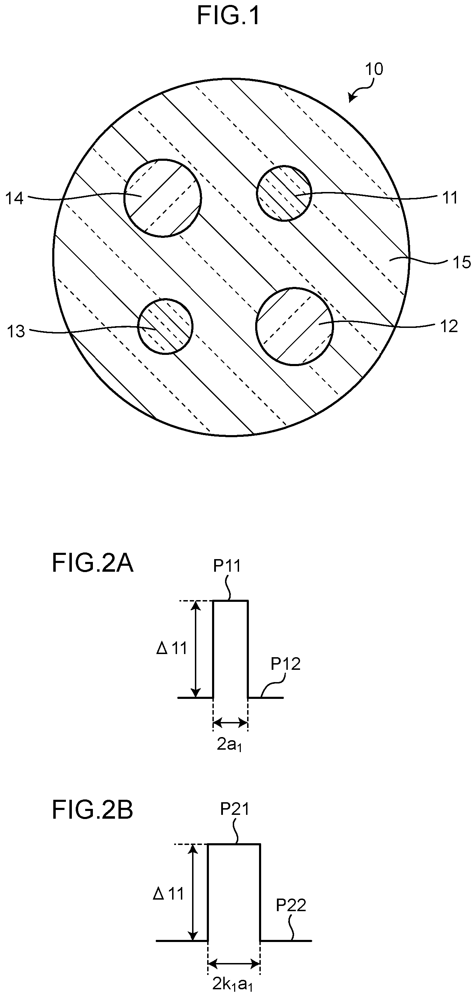

FIG. 1 is a schematic cross-sectional view of a multi-core fiber according to a first embodiment viewed from a plane perpendicular to a longitudinal direction of the multi-core fiber. A multi-core fiber 10 includes four core portions 11, 12, 13, and 14 that are a plurality of core portions, and a cladding portion 15.

The core portions 11 to 14 are arranged in a square shape in cross section. Each of the core portions 11 to 14 has a refractive index profile with a step type. The cladding portion 15 surrounds the core portions 11 to 14 and has a refractive index that is lower than the maximum refractive index of each of the core portions 11 to 14. In the present specification, in a case where each of the core portions each has the refractive index profile with the step type, the core portion itself is sometimes referred to as a center core.

The core portions 11 to 14 is made of silica glass containing, for example, germanium, whereas the cladding portion 15 is made of pure silica glass. Here, the pure silica glass mentioned here is extremely high purity silica glass that does not practically contain a dopant for changing the refractive index and that has the refractive index of about 1.444 at the wavelength of 1550 nm. However, in the present specification, the pure silica glass includes the one that contains a certain amount of chlorine or the like that is used in a manufacturing process. Moreover, the core portions 11 to 14 is made of silica glass or pure silica glass that contains at least one of fluorine, chlorine, potassium, and sodium, whereas the cladding portion 15 may be made of silica glass containing fluorine.

Furthermore, the outer diameter of the cladding portion 15 is set to be within the range of 125 $\mu$m $\pm$ 10 $\mu$m.

In the present embodiment, the core portions 11 to 14 are constituted by a first group and a second group that are two core portion groups. The first group includes the core portions 11 and 13 as the plurality of core portions, whereas the second group includes the core portions 12 and 14 as the plurality of core portions.

FIG. 2A and FIG. 2B are explanation diagrams illustrating one example of a refractive index profile of the multi-core fiber 10. FIG. 2A indicates the refractive index profile of each of the core portions 11 and 13 that belong to the first group. Specifically, a profile P11 is the refractive index profile of each of the core portions 11 and 13, and a profile P12 is a refractive index profile of the cladding portion 15. $\Delta 11$ denotes a parameter for defining the refractive index profile of each of the core portions, and is a relative refractive-index difference of the maximum refractive index of the core portion with respect to the refractive index of the cladding portion. Furthermore, a core diameter $2a_1$ is a parameter for defining the refractive index profile of each of the core portions, and is a parameter related to the diameter. Moreover, $a_1$ that is half of a value of the core diameter $2a_1$ is sometimes referred to as a core radius.

Furthermore, FIG. 2B indicates the refractive index profile of each of the core portions 12 and 14 that belongs to the second group. Specifically, a profile P21 is the refractive index profile of each of the core portions 12 and 14, and a profile P22 is the refractive index profile of the cladding portion 15. Furthermore, a core diameter $2k_1a_1$ is a parameter for defining the refractive index profile of each of the core portions and is a parameter related to a diameter, and is $k_1$ times the core diameter $2a_1$ in FIG. 2A. Here, $k_1$ is a positive real number.

As illustrated in FIG. 2A and FIG. 2B, the refractive index profiles of the core portions 11 and 13 are the same, so that the optical properties thereof are also the same. Therefore, each of the core portions 11 and 13 has the same effective core area and the same cutoff wavelength at a predetermined wavelength. Similarly, the refractive index profiles of the core portions 12 and 14 are the same, so that the optical properties thereof are also the same. Therefore, each of the core portions 12 and 14 has the same effective core area and the same cutoff wavelength in a predetermined wavelength. Moreover, the predetermined wavelength mentioned here is a wavelength that is included in a wavelength bandwidth (wavelength bandwidth used) that is used as a wavelength of signal light in a case where optical fiber communication is performed by using the multi-core fiber 10 as a transmission path. The wavelength bandwidth used is, for example, 1520 nm to 1620 nm. The predetermined wavelength is, for example, 1550 nm. Moreover, it is preferable that the multi-core fiber 10 transmits light in a single mode with the wavelength bandwidth used.

Here, in the multi-core fiber 10, the core portions that belong to different groups have different effective core areas or cutoff wavelengths at the predetermined wavelength that differ by 10% or more. For example, the effective core areas (Aeff) of the core portions 11 and 13 and the core portions 12 and 14 at a wavelength of 1550 nm are 80 $\mu$m$^2$ and 110 $\mu$m$^2$, respectively, and differ by 10% or more. Alternatively, the cutoff wavelengths of the core portions 11 and 13 and the core portions 12 and 14 are 1300 nm and 1440 nm, respectively, and differ by 10% or more.

Furthermore, in the multi-core fiber 10, the core portions that are most adjacent to each other from among the core portions 11 to 14 belong to different groups between the core portion groups. For example, the core portions 12 and 14 that are most adjacent to the core portion 11 that belongs to the first group belong to the second group.

In the multi-core fiber 10 that has been configured as described above, the outer diameter of the cladding portion 15 is within the range of 125 $\mu$m $\pm$ 10 $\mu$m, which is substantially the same as the outer diameter of the standard optical fiber that is used in optical fiber communication, and therefore, the multi-core fiber 10 is highly practical in that a jigs or the like that are known and widely used is able to be used. Furthermore, in the multi-core fiber 10, the core portions that belong to different groups have the different effective core areas or the different cutoff wavelengths at the predetermined wavelength by a value equal to or greater than 10%, so that the subject core portions function as heterogenous core portions. As a result of this, inter-core crosstalk is suppressed. For example, in the multi-core fiber 10, the inter-core crosstalk at the wavelength of 1550 nm becomes equal to or less than -30 dB in a length of 100 km. Here, the inter-core crosstalk is a value of a crosstalk with an adjacent core portion in a certain single core portion.

Furthermore, in the multi-core fiber 10, the core portions that are most adjacent to each other from among the core portions 11 to 14 belong to different groups between the core portion groups, so that this state is preferable in that the inter-core crosstalk is suppressed.

Furthermore, in the multi-core fiber 10, regarding the parameter for defining the refractive index profile of each of the core portions belonging to different groups between the core portion groups, the parameters related to the relative refractive-index differences are the same, and the parameters related to the diameters differ in terms of a magnification. Specifically, in the core portions 11 and 13 and the core portions 12 and 14 that belong to different groups, as illustrated in FIG. 2, the relative refractive-index differences thereof are the same as indicated by $\Delta 11$, and the core diameters differ in the magnification by a factor of $k_1$. In the multi-core fiber 10 having this configuration, it is possible to prepare each of the core preforms by manufacturing a common core preform that corresponds to the base of the core preform for manufacturing each of the core portions 11 and 13 and the core preform for manufacturing each of the core portions 12 and 14, and only changing the thickness of the common core preform, so that this is preferable in that the multi-core fiber 10 is able to be easily manufactured.

In the following, a result of careful consideration obtained by the present inventor for implementing the multi-core fiber that has higher practicality while suppressing inter-core crosstalk will be described. Specifically, a structure of the multi-core fiber in which the outer diameter of the cladding portion is 125 $\mu$m has been assumed such that two types heterogenous cores with Aeff of 80 $\mu$m$^2$ and 110 $\mu$m$^2$ are included as the core portions, and also, the cutoff wavelength is within the range of 1400 $\pm$ 100 nm. Then, the inter-core crosstalk (XT) at the wavelength of 1550 nm in the length of 100 km and a confinement loss at a wavelength of 1625 nm are examined while changing the number of core portions using both of simulation calculations and experiments.

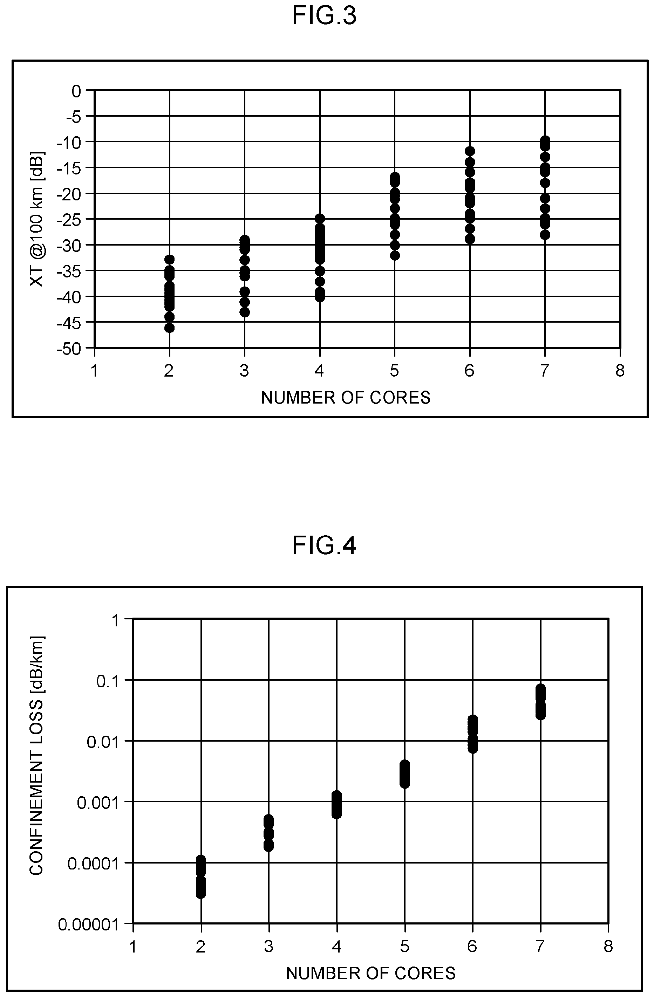

FIG. 3 is a diagram illustrating one example of a relationship between the number of cores and the inter-core crosstalk. FIG. 4 is a diagram illustrating one example of a relationship between the number of cores and the confinement loss. In FIGS. 3 and 4, only the pieces of data on patterns in each of which favorable property has been obtained from a great number of calculations and experiments are selected and plotted.

As can be seen from FIGS. 3 and 4, in a case of implementation of XT of -30 dB or less and a confinement loss of 0.001 dB/km or less, it is preferable that the number of cores is equal to or greater than 2 and equal to or less than 4. If the number of cores increases, the XT increases as a result of a decrease in the distance between the cores, or the confinement loss increases as a result of a decrease in the distance between the core portion and the outer periphery of the cladding portion. Moreover, there are some differences in the tendencies that are indicated in FIGS. 3 and 4 in accordance with the setting of the Aeff or the cutoff wavelength, but substantially the same tendencies have been obtained as long as the Aeff is between 60 and 180 $\mu$m$^2$. Furthermore, it is preferable that the number of cores is four in terms of Space Division Multiplexing (SDM) using multiple number of cores.

Subsequently, the present inventor has examined how much the Aeff needs to differ in order to suppress the inter-core crosstalk. Specifically, as illustrated in FIG. 1, a relationship between a difference in the Aeff between the cores and the inter-core crosstalk (XT) in the length of 100 km at a wavelength 1550 nm has been examined in various kinds of multi-core fibers in each of which the number of cores is four and that has been set such that the outer diameter of the cladding portion is 125 $\mu$m, a confinement loss of each of the core portions at a wavelength of 1625 nm is 0.001 dB/km, and the Aeff is between 60 and 180 $\mu$m$^2$.

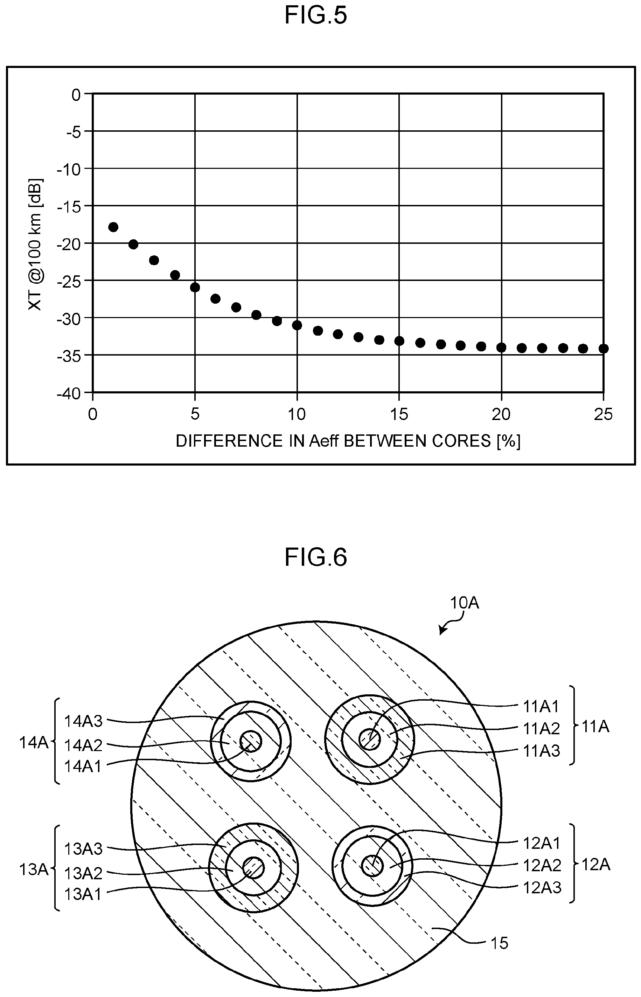

FIG. 5 is a diagram illustrating one example of a relationship between a difference in the Aeff between the cores and the inter-core crosstalk (XT). Moreover, the XT denotes an average value of the four core portions. As illustrated in FIG. 5, if the difference in the Aeff between the cores is equal to or greater than 10%, it has been confirmed that this state is preferable in that the XT is made equal to or less than -30 dB.

Furthermore, the present inventor has examined how much the cutoff wavelength needs to differ in order to suppress the inter-core crosstalk. As a result of this, also regarding the cutoff wavelength between the cores, if the cutoff wavelength differs 10% or more between the cores, it has been confirmed that this state is preferable in that the XT is made equal to or less than -30 dB.

Incidentally, even when there is a difference in the cutoff wavelength between cores, as long as the difference is in the range in which light is transmitted in a single mode in the wavelength bandwidth used, there will be no significant difference in the optical property of the core portions. However, in a case where there is a difference in Aeff, if the difference is too large, a difference in the signal noise ratio (SNR) will occur between signal light propagating through different core portions. On this point, it is preferable that the difference in Aeff between the cores is not too large, and, for example, 70% or less is preferable.

According to the careful consideration performed by the present inventor using the calculations and the experiments, it has been found that combinations of Aeff indicated by the five examples listed in Table 1 are preferable. Moreover, the Aeff, the average confinement loss, and the average XT listed in Table 1 are values at the time of the wavelength of 1550 nm, 1625 nm, and 1550 nm, respectively. In other words, at a wavelength of 1550 nm, a combination of the Aeff of the first core portions belonging to the first group and the Aeff of the second core portions belonging to the second group is preferably one of the combinations of 60 to 90 $\mu$m$^2$ and 90 to 120 $\mu$m$^2$, 70 to 100 $\mu$m$^2$ and 90 to 130 $\mu$m$^2$, a 90 to 120 $\mu$m$^2$ and 110 to 140 $\mu$m$^2$, 110 to 140 $\mu$m$^2$ and 120 to 160 $\mu$m$^2$, and 120 to 160 $\mu$m$^2$ and 140 to 180 $\mu$m$^2$. Furthermore, it is preferable that the average Aeff of the first core portions belonging to the first group is smaller than the average Aeff of the second core portions belonging to the second group by an amount equal to or greater than 5 $\mu m^2$.

Table 1

| Example of Combination | 1 | 2 | 3 | 4 | 5 |
|---|---|---|---|---|---|
| Aeff [$\mu m^2$] of first group | 60 - 90 | 70 - 100 | 90 - 120 | 110 - 140 | 120 - 160 |
| Aeff [$\mu m^2$] of second group | 90 - 120 | 90 - 130 | 110 - 140 | 120 - 160 | 140 - 180 |
| Average confinement loss [dB/km] | 0.00079 | 0.00075 | 0.00081 | 0.00092 | 0.00098 |
| Average XT @ 100 km [dB] | - 36 | - 37 | - 35 | - 32 | - 30 |

Moreover, the example 2 is particularly preferable in terms of a low confinement loss and a low XT. Furthermore, if the cutoff wavelength is too small, a bending loss may possibly increase and the XT property may possibly be degraded. According to the careful consideration performed by the present inventor, it has been found that the cutoff wavelength in the first group is preferably 1200 to 1500 nm, and the cutoff wavelength in the second group is preferably 1300 to 1520 nm. Furthermore, it has been found that the average cutoff wavelength of the first core portions belonging to the first group is preferably shorter than the average cutoff wavelength of the second core portions belonging to the second group by 100 nm or more. Furthermore, the transmission loss at the predetermined wavelength is preferably 0.25 dB/km in terms of the use in a system.

Here, the state in which the Aeff of each of the first core portions belonging to the first group and the Aeff of each of the second core portions belonging to the second group differ by 10% or more is able to be defined as follows:

(Aeff of the first core portion) < (Aeff of the second core portion), and also, ((Aeff of each of the second core portions) - (Aeff of each of the first core portions)) / (Aeff of each of the first core portions) $\times$ 100 is 10% or more.

Furthermore, the state in which the cutoff wavelength of each of the first core portions belonging to the first group and the cutoff wavelength of each of the second core portions belonging to the second group differ by 10% or more may be defined as follows:

(cutoff wavelength of each of the first core portions) < (cutoff wavelength of each of the second core portions), and also, ((cutoff wavelength of each of the second core portions) - (cutoff wavelength of each of the first core portions)) / (cutoff wavelength of each of the first core portions) $\times$ 100 is 10% or more.

In addition, in order to implement the preferable Aeff and the preferable cutoff wavelength as described above, the relative refractive-index difference of the maximum refractive index of the center core of the core portion with respect to the refractive index of the cladding portion is preferably 0.12 to 0.46% in terms of the Aeff, the transmission loss, the microbending loss, and the XT property. Moreover, if the relative refractive-index difference is too low, there may be a case in which the microbending loss or the transmission loss increases, or there may be a case in which the XT property is degraded, whereas, if the relative refractive-index difference is too high, there may be a case in which the transmission loss increases due to a scattering loss, or there may be a case in which the Aeff decreases.

FIG. 6 is a schematic cross-sectional view of a multi-core fiber according to a second embodiment viewed from a plane perpendicular to a longitudinal direction of the multi-core fiber. A multi-core fiber 10A has a configuration in which the core portions 11 to 14 included in the multi-core fiber 10 illustrated in FIG. 1 are replaced with core portions 11A, 12A, 13A, and 14A.

The core portions 11A to 14A are arranged in a square shape in cross section. Each of the core portions 11A to 14A has a refractive index profile with a trench type. Specifically, the core portion 11A includes a center core 11A1, an intermediate layer 11A2, and a trench layer 11A3. The core portion 12A includes a center core 12A1, an intermediate layer 12A2, and a trench layer 12A3. The core portion 13A includes a center core 13A1, an intermediate layer 13A2, and a trench layer 13A3. The core portion 14A includes a center core 14A1, an intermediate layer 14A2, and a trench layer 14A3. In each of the core portions 11A to 14A, the intermediate layer surrounds the center core. The refractive index of each of the intermediate layers is the refractive index that is the same as that of the cladding portion 15 or the refractive index for which the relative refractive-index difference with respect to the cladding portion 15 is within the range of $\pm$ 0.05%. Furthermore, each of the trench layers surrounds the corresponding intermediate layers. The refractive index of each of the trench layers is lower than the refractive index of each of the intermediate layers and the cladding portion.

Each of the center cores 11A1 to 14A1 is made of, for example, silica glass that contains germanium; silica glass that contains at least one of fluorine, chlorine, potassium, and sodium; or pure silica glass. Each of the intermediate layers 11A2 to 14A2 is made of the same quality of material as that of, for example, the cladding portion 15. Each of the trench layers 11A3 to 14A3 is made of, for example, silica glass that contains fluorine.

In the present embodiment, the core portions 11A to 14A are constituted by the first group and the second group that are two core portion groups. The first group includes the core portions 11A and 13A as the plurality of core portions, whereas the second group includes the core portions 12A and 14A as the plurality of core portions.

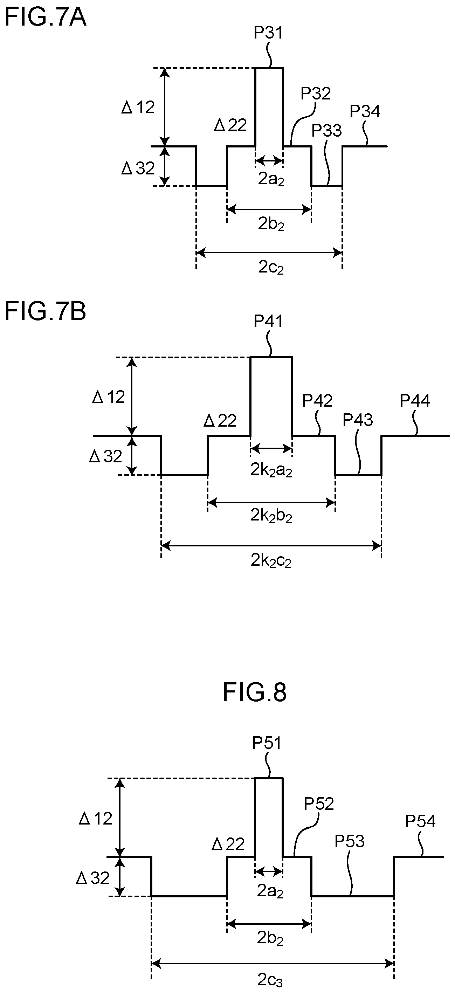

FIG. 7A and FIG. 7B are explanation diagrams illustrating examples of refractive index profiles of the multi-core fiber 10. FIG. 7A indicates the refractive index profile of each of the core portions 11A and 13A that belongs to the first group. Specifically, a profile P31 is the refractive index profile of each of the center cores 11A1 and 13A1, a profile P32 is the refractive index profile of each of the intermediate layers 11A2 and 13A2, a profile P33 is the refractive index profile of each of the trench layers 11A3 and 13A3, and a profile P34 is the refractive index profile of the cladding portion 15.

$\Delta 12$ denotes a parameter for defining the refractive index profile of each of the core portions, and is a relative refractive-index difference of the maximum refractive index of each of the center cores included in the corresponding core portions with respect to the refractive index of the cladding portion. Furthermore, a center core diameter $2a$, is a parameter for defining the refractive index profile of each of the core portions, and is a parameter related to a diameter. Moreover, $a_2$ that is half of a value of the center core diameter $2a_2$ is sometimes referred to as a center core radius. $\Delta 22$ is a parameter for defining the refractive index profile of each of the core portions, and is a relative refractive-index difference of the refractive index of each of the intermediate layers with respect to the refractive index of the cladding portion. Furthermore, an outer diameter $2b_2$ that is the outer diameter of each of the intermediate layers is a parameter for defining the refractive index profile of the corresponding core portions, and is a parameter related to the diameter. $\Delta 32$ is a parameter for defining the refractive index profile of each of the core portions, and is a relative refractive-index difference of the refractive index of each of the trench layers with respect to the refractive index of the cladding portion. Furthermore, an outer diameter $2c_2$ that is the outer diameter of the each of trench layers is a parameter for defining the refractive index profile of the corresponding core portions, and is a parameter related to the diameter.

Furthermore, FIG. 7B indicates the refractive index profile of each of the core portions 12A and 14A that belongs to the second group. Specifically, a profile P41 is the refractive index profile of each of the center cores 12A1 and 14A1, a profile P42 is the refractive index profile of each of the intermediate layers 12A2 and 14A2, a profile P43 is the refractive index profile of each of the trench layers 12A3 and 14A3, and a profile P44 is the refractive index profile of the cladding portion 15.

Furthermore, a center core diameter $2k_2 a_2$ is a parameter for defining the refractive index profile of each of the core portions and is a parameter related to the diameter, and is $k_2$ times the center core diameter $2a_2$ in FIG. 7A. Here, $k_2$ is a positive real number. Similarly, an outer diameter $2k_2 b_2$ that is the outer diameter of each of the intermediate layers is a parameter for defining the refractive index profile of each of the core portions, and is a parameter related to the diameter. Furthermore, an outer diameter $2k_2 c_2$ that is the outer diameter of each of the trench layers is a parameter for defining the refractive index profile of each of the core portions, and is a parameter related to the diameter.

As illustrated in FIG. 7A and FIG. 7B, the core portions 11A and 13A have the same refractive index profile, so that the optical properties of the core portions 11A and 13A are also the same. Therefore, the core portions 11A and 13A have the same effective core area and the same cutoff wavelength at a predetermined wavelength. Similarly, the core portions 12A and 14A have the same refractive index profile, so that the optical properties of the core portions 12A and 14A are also the same. Therefore, the core portions 12A and 14A has the same effective core area and the same cutoff wavelength at the predetermined wavelength.

Here, in also the multi-core fiber 10A, the core portions that belong to different groups have different effective core areas or cutoff wavelengths at the predetermined wavelength that differ by 10% or more. Furthermore, in also the multi-core fiber 10A, the core portions that are most adjacent to each other from among the core portions 11A to 14A belong to different groups between the core portion groups. For example, the core portions 12A and 14A that are most adjacent to the core portion 11A that belongs to the first group belong to the second group.

In also the multi-core fiber 10A that has been configured as described above, the outer diameter of the cladding portion 15 is within the range of 125 $\mu$m $\pm$ 10 $\mu$m, so that the multi-core fiber 10A is highly practical. Furthermore, in also the multi-core fiber 10A, the core portions that belong to different groups have different effective core areas or cutoff wavelengths at the predetermined wavelength that differ by 10% or more, so that inter-core crosstalk is suppressed. For example, in the multi-core fiber 10A, the inter-core crosstalk at a wavelength of 1550 nm is equal to or less than -30 dB in a length of 100 km.

Furthermore, in also the multi-core fiber 10A, the core portions that are most adjacent to each other from among the core portions 11A to 14A belong to different groups between the core portion groups, so that this state is preferable in that the inter-core crosstalk is suppressed.

Furthermore, in also the multi-core fiber 10A, regarding the parameter for defining the refractive index profile of each of the core portions belonging to different groups between the core portion groups, the parameters related to the relative refractive-index differences are the same, and the parameters related to the diameters differ in terms of a magnification. Specifically, in the core portions 11A and 13A and regarding the core portions 12A and 14A that belong to different groups, as illustrated in FIG. 7A and FIG. 7B, the relative refractive-index differences thereof are the same as indicated by $\Delta 12$, $\Delta 22$, $\Delta 32$, and the parameters related to the diameters differ in the magnification by a factor of $k_2$. In the multi-core fiber 10A having this configuration, it is possible to prepare each of the core preforms by manufacturing a common core preform that corresponds to the base of the core preforms for manufacturing the core portions 11A and 13A and the core preform for manufacturing the core portions 12A and 14A, and only changing the thickness of the common core preform, so that this is preferable in that the multi-core fiber 10 is able to be easily manufactured.

In the multi-core fiber 10A according to the second embodiment, the refractive index profile of each of the core portions 12A and 14A may also be the refractive index profile described below. FIG. 8 is an explanation diagram illustrating a refractive index profile according to a modification of the multi-core fiber 10 according to the second embodiment. In this modification, a profile P51 is the refractive index profile of each of the center cores 12A1 and 14A1, a profile P52 is the refractive index profile of each of the intermediate layers 12A2 and 14A2, a profile P53 is the refractive index profile of each of the trench layers 12A3 and 14A3, and a profile P54 is the refractive index profile of the cladding portion 15.

Furthermore, an outer diameter $2c_3$ that is the outer diameter of each of the trench layers is a parameter for defining the refractive index profile of the respective core portions, and is a parameter related to the structure that is present an outer periphery of the center core. Moreover, $c_2$ and $c_3$ are different values.

In also the present modification, the core portions 12A and 14A have the same refractive index profile, so that the optical property of the core portions 12A and 14A are the same. Therefore, the core portions 12A and 14A have the same effective core area and the same cutoff wavelength at the predetermined wavelength.

Furthermore, in also the multi-core fiber according to the present modification, the core portions that belong to different groups have different effective core areas or cutoff wavelengths at the predetermined wavelength that differ by 10% or more. Furthermore, in also the multi-core fiber according to the present modification, the core portions that are most adjacent to each other belong to different groups between the core portion groups.

The multi-core fiber according to the present modification configured as described above is highly practical, and inter-core crosstalk is suppressed. Furthermore, the core portions that are most adjacent to each other belong to different groups between the core portion groups, so that this is preferable in that the inter-core crosstalk is suppressed.

Furthermore, in the multi-core fiber according to the present modification, regarding the parameter for defining the refractive index profile of each of the core portions belonging to different groups between the core portion groups, the parameters related to the center cores are the same, the parameters related to the structures located on the outer periphery of the center core are different. In the multi-core fiber having the configuration as described above, the property of the Aeff is mainly and dominantly determined by the structure of the center core, so that it is possible to configure the core portions constituted in a heterogenous core structure while having the Aeff with a similar value.

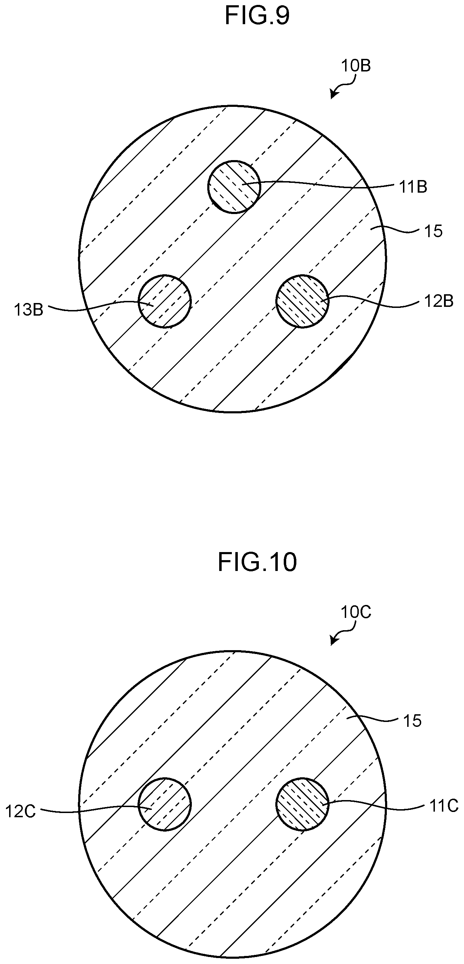

FIG. 9 is a schematic cross-sectional view of a multi-core fiber according to a fourth embodiment viewed from a plane perpendicular to a longitudinal direction of the multi-core fiber. A multi-core fiber 10B has a configuration in which the core portions 11 to 14 included in the multi-core fiber 10 illustrated in FIG. 1 are replaced with core portions 11B, 12B, and 13B.

The core portions 11B to 13B are arranged in an equilateral triangular shape in cross section. Each of the core portions 11B to 13B has a refractive index profile with a step type or a trench type.

In the present embodiment, the core portions 11B to 13B constitute three core portion groups. In other words, each of the core portions 11B to 13B independently constitutes a group.

In the multi-core fiber 10B, the core portions that belong to different groups have different effective core areas or cutoff wavelengths at the predetermined wavelength that differ by 10% or more. Furthermore, in also the multi-core fiber 10B, the core portions that are most adjacent to each other from among the core portions 11B to 13B belong to different groups between the core portion groups.

In also the multi-core fiber 10B that has been configured as described above, practicality is high, and inter-core crosstalk is suppressed.

Moreover, in the present embodiment, each of the core portions 11B to 13B independently constitutes a group, but two core portions may constitute a single group, and the other one of core portions may constitute a single group.

FIG. 10 is a schematic cross-sectional view of a multi-core fiber according to a fourth embodiment viewed from a plane perpendicular to a longitudinal direction of the multi-core fiber. A multi-core fiber 10C has a configuration in which the core portions 11 to 14 included in the multi-core fiber 10 illustrated in FIG. 1 are replaced with core portions 11C and 12C.

Each of the core portions 11C and 12C has a refractive index profile with a step type or a trench type.

In the present embodiment, the core portions 11C and 12C constitute two core portion groups. In other words, each of the core portions 11C and 12C independently constitutes a group.

In also the multi-core fiber 10C, the core portions that belong to different groups have different effective core areas or cutoff wavelengths at the predetermined wavelength that differ by 10% or more.

In also the multi-core fiber 10C that has been configured as described above, practicality is high and inter-core crosstalk is suppressed.

The multi-core fiber according to the embodiment is able to be manufactured by using, for example, a method referred to as a hole drilling method described below.

For example, a core preform is manufactured by using a publicly known Vapor-phase Axial Deposition (VAD) method or a publicly known Outside Vapor Deposition (OVD) method. The core preform mentioned here is a preform that includes a part of a cladding portion and that is formed so as to surround a section corresponding to the core portion of the multi-core fiber. The number of core preforms to be prepared corresponds to the number of types determined in accordance with the number of core portion groups. Moreover, the diameter of the core preform may be different for each core portion group.

Furthermore, a clad preform that is used to form most of cladding portion is prepared, and a hole for inserting the core preform is provided by an amount corresponding to the number of core portions. Moreover, after the holes have been provided, a cleaning process may be performed on the inner portion of each of the holes.

Subsequently, a core preform is inserted into each of the holes provided in the clad preform and is integrally formed by performing heat treatment or the like, and then an optical fiber preform is obtained. Furthermore, the multi-core fiber is drawn from the optical fiber preform by using a publicly known wire drawing furnace.

The multi-core fiber having the structure of the multi-core fiber 10A according to the second embodiment has been manufactured in accordance with the manufacturing method described above. Moreover, the center core is made of pure silica glass, whereas the intermediate layer, the trench layer, and the cladding portion are made of silica glass that contains fluorine. Furthermore, the Aeff of the core portion has been designed to be 80 $\mu m^2$ or 110 $\mu m^2$ at a wavelength of 1550 nm. Furthermore, the outer diameter of the cladding portion has been designed to be 125 $\mu m$. Furthermore, the distance (core pitch) between the centers of the core portions that are most adjacent to each other has been designed to be 39 $\mu m$, the distance (outer thickness) between the center of the core portion that is located at a position closest to the outer periphery of the cladding portion and the outer periphery of the cladding portion has been designed to be 35 $\mu m$.

Table 2 illustrates the structure parameter and the optical property of each of the core portions that are included in the multi-core fiber and that are manufactured as described above. In Table 2, a center core Δ indicates a relative refractive-index difference related to the center core, a trench Δ indicates a relative refractive-index difference related to the trench layer, but the value outside parentheses is a value based on the refractive index of the cladding portion, whereas the value inside parentheses is the value based on the refractive index of the pure silica glass. Furthermore, a clad Δ indicates a relative refractive-index difference of the cladding portion based on the refractive index of the pure silica glass. Furthermore, b/a is a ratio of the outer diameter of the intermediate layer to the center core diameter, c/a indicates a ratio of the outer diameter of the trench layer to the center core diameter. λcc indicates a cutoff wavelength. λ0 indicates a zero dispersion wavelength. The bending loss @1550 nm / 30 mm Φ indicates a bending loss at a wavelength of 1550 nm indicated when the multi-core fiber is bent at a diameter of 30 mm.

As indicated in Table 2, in the multi-core fibers according to the embodiments, the XT is suppressed at a level equal to or less than -30 dB in each of the cores, and also, the outer diameter of the cladding portion is 125 $\mu m$, so that practicality is high. Furthermore, although descriptions will be omitted in Table 2, in the multi-core fibers according to the embodiments, a confinement loss at a wavelength of 1550 nm becomes equal to or less than 0.01 dB/km, and is sufficiently low.

Table 2

|  | Core 1 | Core 2 | Core 3 | Core 4 |
|---|---|---|---|---|
| Center Core Δ [%] | 0.37 (0.11) | 0.27 (0.09) | 0.37 (0.11) | 0.27 (0.09) |
| Trench Δ [%] | -0.13 (- 0.39) | -0.16 (- 0.34) | -0.13 (- 0.39) | -0.16 (- 0.34) |
| Clad Δ [%] | -0.26 | - 0.18 | -0.26 | - 0.18 |
| Center core diameter [$\mu m$] | 9.4 | 11.3 | 9.4 | 11.3 |
| b/a | 1.5 | 2.5 | 1.5 | 2.5 |
| c/a | 2.8 | 3.5 | 2.8 | 3.5 |
| Aeff @ 1550 nm [$\mu m^2$] | 80 | 108 | 81 | 111 |

(continued)

|  | Core 1 | Core 2 | Core 3 | Core 4 |
|---|---|---|---|---|
| λcc [nm] | 1423 | 1472 | 1431 | 1485 |
| Chromatic dispersion @ 1550 nm [ps/nm/km] | 17.4 | 19.6 | 17.5 | 19.7 |
| Dispersion Slope @ $\lambda 0$ [ps/nm$^2$/km] | 0.062 | 0.063 | 0.061 | 0.063 |
| Bending loss @ 1550 nm/30 mm $\varphi$ [dB/m] | 0.02 | 0.16 | 0.02 | 0.13 |
| Transmission loss [dB/km] | 0.158 | 0.152 | 0.157 | 0.154 |
| XT @ 100 km, 1550 nm [dB] | Cores between 4 and 1 | Cores between 1 and 2 | Cores between 2 and 3 | Cores between 3 and 4 |
|  | - 34.7 | - 33.8 | - 35.5 | - 34.1 |

Moreover, in the above-described embodiments, the refractive index profile of the core portion is the step type or the trench type, but the type of the refractive index profile is not limited to these types in the present disclosure, and may be, for example, a W type. Furthermore, in the above-described embodiment, the number of core portion groups is two or three, but the number of core portion groups is not limited to two or three as long as the number of core portion groups is two or more.

Furthermore, in the above-described embodiment, the relative refractive-index difference (trench $\Delta$) of the trench layer included in the core portion included in the first group and the trench $\Delta$ of the trench layer included in the core portion included in the second group are the same, but may be different from each other. Furthermore, in the above-described embodiment, $b_2$ and $b_3$ are different values, and also, $c_2$ and $c_3$ are different values, but only one of them may be different.

Furthermore, the effective core areas and the cutoff wavelengths of the core portions included in the same core portion group at the predetermined wavelength need not always be the same, but is preferably within the range of $\pm$ 10%.

According to the present disclosure, an advantage is provided in that it is possible to implement a multi-core fiber with higher practicality while suppressing inter-core crosstalk.

Although the disclosure has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A multi-core fiber comprising:

   a plurality of core portions; and
   a cladding portion surrounding the plurality of core portions and having a refractive index lower than a maximum refractive index of the core portions, wherein
   an outer diameter of the cladding portion is within a range of 125 $\mu$m $\pm$ 10 $\mu$m,
   number of the plurality of core portions is two to four,
   the plurality of core portions are constituted by two or more core portion groups, and
   the core portions that belong to the different core portion groups from among the plurality of core portions have different effective core areas or cutoff wavelengths at a predetermined wavelength that differ by 10% or more.

2. The multi-core fiber according to claim 1, wherein

   at least one of the core portion groups includes the plurality of core portions, and
   the effective core areas and the cutoff wavelengths at the predetermined wavelength of the plurality of core portions included in the at least one of the core portion groups is within a range of $\pm$ 10%.

3. The multi-core fiber according to claim 1, wherein the core portions that are most adjacent each other from among the plurality of core portions belong to different groups between the core portion groups.

4. The multi-core fiber according to claim 1, wherein the number of the plurality of core portions is four.

5. The multi-core fiber according to claim 1, wherein each of the plurality of core portions is configured to propagate light in a single mode at a wavelength bandwidth used including the predetermined wavelength, each of the plurality of core portions having the effective core area of 60 to 180 $\mu m^2$, and having an inter-core crosstalk equal to or less than -30 dB in a length of 100 km.

6. The multi-core fiber according to claim 1, wherein

    each of the core portions includes a center core made of silica glass containing germanium, and
    the cladding portion is made of pure silica glass.

7. The multi-core fiber according to claim 1, wherein

    each of the core portions includes a center core made of silica glass containing at least one of fluorine, chlorine, potassium, and sodium, and
    the cladding portion is made of silica glass containing fluorine.

8. The multi-core fiber according to claim 1, wherein, regarding a parameter for defining a refractive index profile of each of the core portions belonging to different groups between the core portion groups, parameters related to relative refractive-index differences are same, and parameters related to diameters differ in terms of a magnification.

9. The multi-core fiber according to claim 1, wherein

    each of the core portions includes a center core and a structure that is located on an outer periphery of the center core, and
    regarding a parameter for defining a refractive index profile of each of the core portions belonging to different groups between the core portion groups, parameters related to the center cores are the same, and parameters related to the structures that are located on the outer periphery of the center cores are different.

10. The multi-core fiber according to claim 1, wherein

    the plurality of core portions include first core portions that belong to a first group between the core portion groups and second core portions that belong to a second group between the core portion groups,
    an average effective core area of the first core portions is smaller than an average effective core area of the second core portions by an amount equal to or greater than 5 $\mu m^2$ at a wavelength of 1550 nm, and
    at a wavelength of 1550 nm, a combination of the effective core area of each of the first core portions and the effective core area of each of the second core portions is one of combinations of
    60 to 90 $\mu m^2$ and 90 to 120 $\mu m^2$,
    70 to 100 $\mu m^2$ and 90 to 130 $\mu m^2$,
    90 to 120 $\mu m^2$ and 110 to 140 $\mu m^2$,
    110 to 140 $\mu m^2$ and 120 to 160 $\mu m^2$, and
    120 to 160 $\mu m^2$ and 140 to 180 $\mu m^2$.

11. The multi-core fiber according to claim 1, wherein

    the plurality of core portions include first core portions that belong to a first group between the core portion groups and second core portions that belong to a second group between the core portion groups,
    an average cutoff wavelength of the first core portions is shorter than an average cutoff wavelength of the second core portions by an amount equal to or greater than 100 nm, and
    the cutoff wavelength of each of the first core portions and the cutoff wavelength of each of the second core portions are 1200 to 1500 nm and 1300 to 1520 nm, respectively.

12. The multi-core fiber according to claim 1, wherein a transmission loss at a wavelength of 1550 nm is equal to or less than 0.25 dB/km.

13. The multi-core fiber according to claim 1, wherein each of the core portions includes a center core, and a relative refractive-index difference of the maximum refractive index of the center core with respect to the refractive index of the cladding portion is 0.12 to 0.46%.

# FIG.1

# FIG.2A

# FIG.2B

# FIG.3

# FIG.4

## FIG.5

## FIG.6

## FIG.7A

## FIG.7B

## FIG.8

# FIG.9

10B

11B

15

13B

12B

# FIG.10

10C

15

12C

11C

Europäisches
Patentamt
European
Patent Office
Office européen
des brevets

# EUROPEAN SEARCH REPORT

**Application Number**

EP 25 18 9783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/116792 A1 (SUMITOMO ELECTRIC INDUSTRIES [JP]) 6 June 2024 (2024-06-06) * Summary; figure 1 * & US 2025/172745 A1 (HAYASHI TETSUYA [JP]) 29 May 2025 (2025-05-29) ----- | 1-13 | INV. G02B6/02 |
| A | US 2021/003773 A1 (HAYASHI TETSUYA [JP]) 7 January 2021 (2021-01-07) * abstract; figure 1 * ----- | 1 | |
| A | US 2022/026629 A1 (TANDON PUSHKAR [US] ET AL) 27 January 2022 (2022-01-27) * abstract; figure 1 * ----- | 1 | |

**TECHNICAL FIELDS SEARCHED (IPC)**

G02B

The present search report has been drawn up for all claims

| Place of search | Date of completion of the search | Examiner |
|---|---|---|
| The Hague | 10 November 2025 | Lehtiniemi, Henry |

EPO FORM 1503 03.82 (P04C01)

## ANNEX TO THE EUROPEAN SEARCH REPORT
## ON EUROPEAN PATENT APPLICATION NO.

EP 25 18 9783

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | Publication date | Patent family member(s) | | Publication date |
|---|---|---|---|---|
| WO 2024116792 A1 | 06-06-2024 | CN | 119998701 A | 13-05-2025 |
| | | EP | 4628949 A1 | 08-10-2025 |
| | | JP | WO2024116792 A1 | 06-06-2024 |
| | | US | 2025172745 A1 | 29-05-2025 |
| | | WO | 2024116792 A1 | 06-06-2024 |
| US 2021003773 A1 | 07-01-2021 | CN | 112180498 A | 05-01-2021 |
| | | DK | 3761088 T3 | 09-09-2024 |
| | | EP | 3761088 A1 | 06-01-2021 |
| | | EP | 4418026 A2 | 21-08-2024 |
| | | JP | 7326933 B2 | 16-08-2023 |
| | | JP | 2021012226 A | 04-02-2021 |
| | | JP | 2023126651 A | 07-09-2023 |
| | | US | 2021003773 A1 | 07-01-2021 |
| US 2022026629 A1 | 27-01-2022 | CN | 116209930 A | 02-06-2023 |
| | | EP | 4189448 A1 | 07-06-2023 |
| | | JP | 2023536451 A | 25-08-2023 |
| | | US | 2022026629 A1 | 27-01-2022 |
| | | WO | 2022026305 A1 | 03-02-2022 |

EPO FORM P0459

For more details about this annex : see Official Journal of the European Patent Office, No. 12/82

**EP 4 685 530 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5168702 B